# EUROPEAN PATENT APPLICATION

(11) **EP 4 811 154 A1**
(43) Date of publication of application: **23.09.2026**
(21) Application number: 26165432.1
(22) Date of filing: 17.03.2026
(51) Int. Cl.: G06F 16/215, G06F 16/22, G06F 16/2455, G06F 16/532, G06F 16/56, G06Q 30/06, G06F 18/10, G06V 10/82

(54) **IMAGE DUPLICATE DETECTION USING A LEARNING MODEL**

(30) Priority: 20.03.2025 US 202519085713
(71) Applicant: eBay Inc., San Jose, CA 95125 (US)
(72) Inventor: BALASUBRAMANIAN, Vidya, SAN JOSE, 95125 (US); GANESHALINGAM, Anton Raj Sujindhar, SAN JOSE, 95125 (US); RAJAGOPALAN, Shrivatsan Navalpakkam, SAN JOSE, 95125 (US); SIKKANDER, Syed Musthafa, SAN JOSE, 95125 (US)
(74) Representative: Müller-Boré & Partner Patentanwälte PartG mbB

(57) **Abstract**

Image duplicate detection using a learning model is described. A computing device obtains multiple images. The computing device generates respective representations of the images based on providing the images as input to a learning model, which can be stored at the local data storage of the computing device. In some examples, the computing device receives one or more parameters representative of the learning model from a server device. The computing device outputs an indication of one or more images based on the respective representations of the images matching at least one representation of the representations of the other images within a threshold value. The representations of the other images are stored at the local data storage of the computing device.

## Description

### BACKGROUND

Computing devices can implement various techniques for obtaining and processing data (e.g., including image data). A computing device may include one or more sensors for capturing the data. Additionally, or alternatively, the computing device may receive the data from another device or as input via a user interface.

The computing device may utilize machine learning and/or artificial intelligence techniques to generate information from the data. The computing device can implement one or more learning models, such as artificial intelligence models and/or machine learning models, to capture patterns and relationships in the data, enabling the models to make predictions or decisions on new, unseen data.

### SUMMARY

A computing device obtains multiple images via image sensors (e.g., cameras) or as input via one or more user interfaces displayed at the computing device. In some examples, the computing device may obtain and store one or more parameters representative of a learning model at local data storage (e.g., in random access memory (RAM), flash memory, solid state drive, or hard disk drive, among other examples). For example, the computing device may obtain weights, biases, and/or other parameters of the learning model from a server system or server device that trains the learning model or by training the learning model at the computing device. The computing device may generate representations of the images using the locally stored learning model. The computing device compares the representations to stored representations of previously processed images to detect duplicates or similarities between the images. Based on the comparison, the computing device outputs an indication of matching images, which may trigger canceling redundant listings, updating existing listings, or generating new listings with generated (e.g., pre-filled) data.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures.
FIG. 1 is an illustration of an environment in an example implementation that is operable to employ techniques described herein.
FIG. 2 depicts an example of a user interface for creating multiple listings for items using machine learning.
FIGs. 3 and 4 depict example architecture for image duplicate detection using a learning model.
FIGs. 5 through 7 depict procedures in example implementations of image duplicate detection using a learning model.
FIG. 8 illustrates an example of a system that includes an example computing device that is representative of one or more computing systems and/or devices that may implement the various techniques described herein.

### DETAILED DESCRIPTION

### Overview

Techniques for image duplicate detection using a learning model are described. A computing device receives or obtains one or more parameters representative of a learning model (e.g., from one or more devices in a server system, by training the learning model) and stores the parameters at local data storage of the computing device. The computing device may also obtain multiple images to use for generating listings of one or more items at an online marketplace application. The computing device generates representations of the images using the locally stored learning model and compares the representations to stored representations of previously processed images to detect duplicates or similarities. Based on this comparison, the computing device outputs an indication of matching images, which may trigger canceling generation of redundant listings, updating existing listings, and/or generating new listings with generated (e.g., pre-filled) data.

Conventional techniques for generating an item listing include a computing device receiving one or more images of an item and details (e.g., features, characteristics, attributes, descriptions) related to the item as input via an online marketplace application. For example, the online marketplace application may output a user interface at the computing device for obtaining the images and the details for respective items manually from a user, and the computing device may generate (e.g., create) listings for the items by publishing the manually collected images and the item details via the online marketplace application. The online marketplace application may store the images and the details at a server system. However, the one or more images may be duplicate images for listings that the computing device previously generated, such that the server system may store duplicate images and details. Conventional techniques for generating listings for items that lead to storing duplicate images on server systems cause inefficient use of memory resources. Additionally, or alternatively, storing the duplicate images may lead to increased use of processing resources, as the server system may receive, index, and retrieve redundant data. The inefficient use of computational resources (e.g., processing and memory resources) can increase latency at the server system and increase energy consumption at the server system. Additionally, or alternatively, the duplicate images may reduce the accuracy and efficiency of image search and retrieval algorithms, degrading user experience and efficiency of the server system related to organization and presentation of digital content related to the listings and/or items.

As described herein, to reduce redundancy in images received and stored at a server system for listings at an online marketplace application, a computing device may process image data prior to storing the image data to determine whether the image data includes redundant or duplicate images. The computing device may obtain one or more parameters that define or are representative of learning models (e.g., machine learning models or other artificial intelligence models or algorithms) and may implement the learning models to detect duplicate images and/or to generate item listings. For example, the computing device may receive one or more parameters, including weights and/or biases, of the learning models from one or more devices in a server system, referred to as server devices. In some other examples, the computing device may obtain the parameters by training the learning models at the computing device. In some examples, the computing device and/or the server devices may dynamically select the learning model according to one or more capabilities (e.g., processing capabilities, memory or storage capabilities, power capabilities) of the computing device.

The computing device may obtain multiple images, such as from an image sensor or as input via a user interface of the computing device. The images may be of (e.g., include) one or more items to be listed via the online marketplace application. The computing device generates representations (e.g., vector representations) of the images using a locally stored machine learning model. The computing device may compare the representations to stored representations of previously processed images to detect duplicates or similarities. For example, if a representation of an image matches within a threshold to a stored representation, then the computing device may determine that the image is a duplicate. The computing device outputs an indication of matching images, such as by displaying a notification of the matching images and/or transmitting an indication of the matching images to another computing device or a server device in the server system. Outputting the indication of the matching images may trigger one or more actions, such as canceling redundant listings, updating existing listings, or generating new listings with data automatically generated using a learning model.

By leveraging local processing capabilities of the computing device to detect duplicate images and cancel generation of duplicate listings, the server system reduces the use of computational resources. For example, by detecting and eliminating duplicate images locally at the computing device, the server system may reduce the amount of data transmitted to and stored at remote servers, thereby decreasing network bandwidth usage and storage. Additionally, or alternatively, the server system may reduce or avoid increased use of processing resources on redundant image analysis and indexing tasks, improving latency and efficiency of the server system. Additionally, or alternatively, detecting similar (e.g., redundant, duplicate) images may provide for the server system to improve efficiency related to managing listings of items. Specifically, by eliminating duplicate images, the server system can reduce memory usage, decrease processing time for image analysis, and minimize network bandwidth usage for data transmission. Further, the server system can reduce memory and processing resource related to generating multiple listings for a same item using learning models by canceling generation of listings for duplicate items (e.g., based on images of the items being within a threshold similarity).

In some aspects, the techniques described herein relate to a computer-implemented method including obtaining, at a computing device, a first set of images, generating, based on providing the first set of images as input to a learning model, respective representations of the first set of images, and outputting, at the computing device, an indication of one or more images based on the respective representations of the one or more images of the first set of images matching at least one representation of a set of representations of a second set of images within a threshold value, where the set of representations of the second set of images are stored at a local data storage of the computing device.

In some aspects, the techniques described herein relate to a computer-implemented method, where the first set of images corresponds to a first set of items to be listed at an online platform, and where the second set of images corresponds to a second set of items previously listed at the online platform.

In some aspects, the techniques described herein relate to a computer-implemented method, further including canceling generation of respective listings corresponding to one or more items associated with the one or more images at an online platform based on the respective representations of the one or more images of the first set of images matching the at least one representation of the set of representations within the threshold value, and displaying, at the computing device, a notification that the generation of the respective listings is canceled.

In some aspects, the techniques described herein relate to a computer-implemented method, further including transmitting, based on the respective representations of the one or more images of the first set of images matching the at least one representation of the set of representations within the threshold value, a request for data corresponding to one or more items associated with the one or more images, where the request includes the at least one representation, generating respective listings corresponding to the one or more items associated with the one or more images at an online platform, and displaying, at the computing device, a notification of the respective listings.

In some aspects, the techniques described herein relate to a computer-implemented method, further including displaying, at the computing device, a notification requesting to increase a respective numerical quantity of items in one or more published listings of one or more items associated with the one or more images based on the respective representations of the one or more images of the first set of images matching the at least one representation of the set of representations within the threshold value.

In some aspects, the techniques described herein relate to a computer-implemented method, further including transmitting, responsive to receiving the first set of images, a request to a server device, where the request indicates the learning model, receiving, at the computing device for storage at the local data storage of the computing device and based on the request, one or more parameters representative of the learning model, and storing, at the local data storage of the computing device, the learning model to generate the respective representations of the first set of images.

In some aspects, the techniques described herein relate to a computer-implemented method, where the request includes capability information associated with a capability of the computing device to use the learning model, and where a type of the learning model is based on the capability information.

In some aspects, the techniques described herein relate to a computer-implemented method, further including removing, from the local data storage of the computing device, the learning model based on outputting the indication of the one or more images.

In some aspects, the techniques described herein relate to a computer-implemented method, where the respective representations of the first set of images and the set of representations of the second set of images include byte values, where the set of representations of the second set of images are organized into a graph data structure in the local data storage of the computing device, and where the computer-implemented method further includes determining, based on traversing the graph data structure, that the respective representations of the one or more images of the first set of images match at least one representation of the set of representations of the second set of images within the threshold value.

In some aspects, the techniques described herein relate to a computer-implemented method, where the first set of images includes the one or more images and one or more remaining images, and where the computer-implemented method further includes updating the graph data structure with the respective representations of the one or more remaining images, and transmitting, to a server device, data associated with the one or more remaining images, where the data includes the one or more remaining images, metadata associated with the one or more remaining images, and the respective representations of the one or more remaining images, and where the respective representations of the one or more remaining images stored in the local data storage are mapped to the data at the server device.

In some aspects, the techniques described herein relate to a system including one or more processors, and a computer-readable storage medium storing instructions that are executable by the one or more processors to perform operations including receiving, at a computing device, a first set of images, generating, based on providing the first set of images as input to a learning model, respective representations of the first set of images, and outputting, at the computing device, an indication of one or more images based on the respective representations of the one or more images of the first set of images matching at least one representation of a set of representations of a second set of images within a threshold value, where the set of representations of the second set of images are stored at a local data storage of the computing device.

In some aspects, the techniques described herein relate to a computer-implemented method including transmitting, to a computing device for storage at a local data storage of the computing device, one or more parameters representative of a learning model, where the learning model is configured to generate respective representations of a first set of images, and transmitting, to the computing device, instructions to cause the computing device to output an indication of one or more images of the first set of images based on the respective representations of the one or more images of the first set of images matching at least one representation of a set of representations of a second set of images within a threshold value.

In some aspects, the techniques described herein relate to a computer-implemented method, where the first set of images corresponds to a first set of items to be listed at an online platform, and where the second set of images corresponds to a second set of items previously listed at the online platform.

In some aspects, the techniques described herein relate to a computer-implemented method, further including transmitting, to the computing device, instructions to cause the computing device to cancel generation of respective listings corresponding to one or more items associated with the one or more images at an online platform based on the respective representations of the one or more images of the first set of images matching the at least one representation of the set of representations within the threshold value, and transmitting, to the computing device, instructions to cause the computing device to display, at the computing device, a notification that the generation of the respective listings is canceled.

In some aspects, the techniques described herein relate to a computer-implemented method, further including receiving, based on the respective representations of the one or more images of the first set of images matching the at least one representation of the set of representations within the threshold value, a request for data corresponding to one or more items associated with the one or more images, where the request includes the at least one representation, receiving, from the computing device, respective listings corresponding to the one or more items associated with the one or more images at an online platform, and publishing the respective listings.

In some aspects, the techniques described herein relate to a computer-implemented method, further including receiving, from the computing device, a notification requesting to increase a respective numerical quantity of items in one or more published listings of one or more items associated with the one or more images based on the respective representations of the one or more images of the first set of images matching the at least one representation of the set of representations within the threshold value, and updating the one or more published listings of the one or more items by increasing the respective numerical quantity of items.

In some aspects, the techniques described herein relate to a computer-implemented method, where transmitting the one or more parameters representative of the learning model includes receiving, from the computing device, a request that indicates the learning model, where the request includes capability information associated with a capability of the computing device to use the learning model, and selecting the learning model based on the request, where a type of the learning model is based on the capability information.

In some aspects, the techniques described herein relate to a computer-implemented method, where the respective representations of the first set of images and the set of representations of the second set of images include byte values, where the set of representations of the second set of images are organized into a graph data structure in the local data storage of the computing device.

In some aspects, the techniques described herein relate to a computer-implemented method, where the first set of images includes the one or more images and one or more remaining images, and where the computer-implemented method further includes receiving, from the computing device, data associated with the one or more remaining images, where the data includes the one or more remaining images, metadata associated with the one or more remaining images, and the respective representations of the one or more remaining images, and where the respective representations of the one or more remaining images stored in the local data storage are mapped to the data.

In some aspects, the techniques described herein relate to a computer-implemented method, further including training the learning model based on providing, as input to the learning model, labeled data samples including images and corresponding expected image representations.

### Example of an Environment

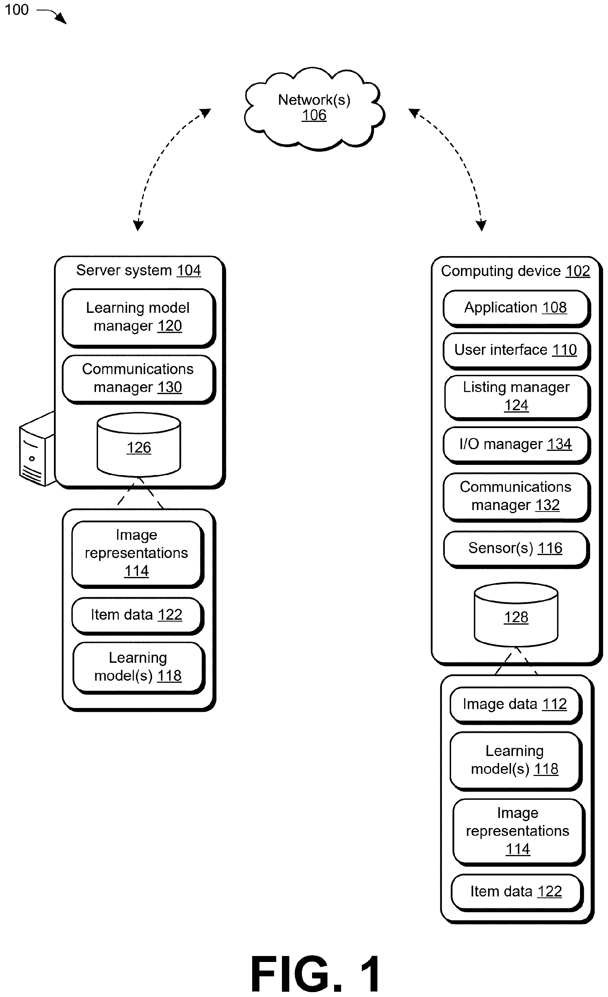

FIG. 1 is an illustration of an environment 100 in an example implementation that is operable to implement techniques described herein. The environment 100 includes a computing device 102 and a server system 104. In one or more implementations, the computing device 102 and the server system 104 may be communicatively coupled via one or more networks 106. An example of the networks 106 is the Internet, although the computing device 102 and the server system 104 may be communicatively coupled using one or more different connections or different networks 106 (e.g., wireless networks) in various implementations.

A server system 104 may include one or more devices, such as application servers, database servers, web servers, and file servers, among other examples, to manage different aspects of data processing and storage. The devices in the server system 104 may be referred to as server devices. In some examples, the computing device 102 and the server devices in the server system 104 may exchange instructions, signaling, messages, or other communications via the networks 106 (e.g., a wireless connection, over the air) or via a wired connection (e.g., a physical connections). For example, the server devices may transmit signaling to the computing device 102 that includes instructions that cause the computing device 102 to perform one or more tasks or actions (display or output feedback or notifications, cancel generation of item listings, etc.). The computing device 102 may receive and decode the signaling and may perform the actions according to the instructions.

Although the server system 104 is depicted in the environment 100 as being separate from the computing device 102, in one or more implementations, an entirety, or various portions of the server system 104 may be implemented at or by the computing device 102. In at least one implementation, for example, at least a portion of the server system 104 may be implemented by an application 108 of the computing device 102 and/or using various resources of the computing device 102, such as hardware resources, an operating system, firmware, and so forth. Additionally, or alternatively, the server system 104 may be implemented by server-based storage resources, processing resources, and so on of devices other than the computing device 102. For example, at least a portion of the server system 104 may be implemented using a third-party service, such as a web services platform that provides one or more hardware and/or other computing resources to support provision of services by web service providers. In variations, an entirety, or various portions of the server system 104 may be implemented at or by a device of the user (e.g., a mobile device, a laptop, a wearable device, or any other device).

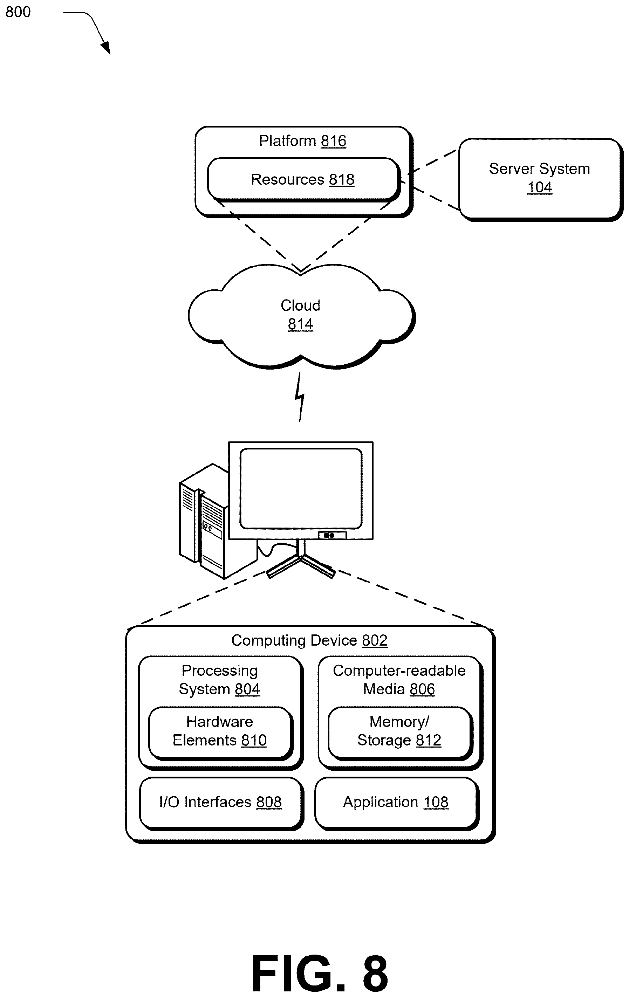

A computing device 102 that implements the environment 100 is configurable in a variety of ways. A computing device 102, for example, may be configurable as a desktop computer, a laptop computer, a mobile device (e.g., assuming a handheld configuration such as a tablet or mobile phone), an internet of things (IoT) device, a wearable device (e.g., a smart watch, a ring, or smart glasses), an augmented reality and/or virtual reality device (e.g., the smart glasses), a server, and so forth. Thus, a computing device 102 may range from full resource devices with substantial memory and processor resources to low-resource devices with reduced memory and/or processing resources. Although in instances in the following discussion reference is made to a computing device 102 in the singular, a computing device 102 may be representative of or may include multiple different devices, such as multiple servers of a server farm utilized to perform operations "over the cloud," as further described in relation to FIG. 8.

In at least one implementation, the application 108 may support communication of data across the networks 106 between the computing device 102 and the server system 104 (e.g., instructions to cause the computing device 102 to perform tasks or actions). By supporting such data communication, the application 108 may provide a respective user of the computing device 102 (e.g., and users of other computing devices) access to listing functionality for one or more items. For example, the computing device 102 may receive data from the server system 104. Based on the data, the application 108 may cause various systems of the computing device 102 to output one or more user interfaces 110, such as by displaying the user interfaces 110 via display devices or making accessible voice-based user interfaces. In some cases, the application 108 may be an online marketplace application, such as an e-commerce platform, auction site, or peer-to-peer selling platform, where users can list, buy, and sell various items. The application 108 may also include or interface with social media platforms with marketplace features or specialized marketplaces for categories of items, such as electronics, fashion, or collectibles. The application 108 may transmit image data 112 and/or image representations 114 from the computing device 102 to the server system 104. Additionally, or alternatively, the application 108 may receive processed listing data or learning model outputs from the server system 104 and/or from the computing device 102 and display them on the computing device 102 (e.g., at the user interface 110).

Through interaction of a user with the computing device 102, the application 108 may obtain user input (e.g., image data 112) via the user interfaces 110. Examples of such input may include, but are not limited to, receiving (e.g., obtaining) touch input in relation to portions of a displayed user interface, receiving one or more voice commands or other audio input, receiving typed input (e.g., via a physical or virtual ("soft") keyboard), receiving mouse or stylus input, and so forth. One example of the application 108 is a browser or other web application that facilitates user interaction with listing functionality. Another example of the application 108 is a web-based computer application that facilitates user interaction with listing functionality, such as a mobile application or a desktop application. The application 108 may be configured in different ways, which provide for users to interact with the computing device 102 and by extension perform actions to view, create, or otherwise interact with item listings, without departing from the spirit or scope of the techniques described herein.

The user input can include input that cause capture of data from one or more sensors 116, such as the image data 112. The image data 112 may include digital representations of visual information captured by one or more sensors 116 of the computing device 102. Examples of image data 112 may include, but are not limited to, photographs, scans, video frames, live camera feeds, and augmented reality overlays. For example, the image data 112 may include images or photographs of one or more items, such as a single item or a collection of items or products to be listed on an online marketplace. In some cases, the computing device 102 may obtain the image data 112 as input (e.g., user input, upload) via the user interface 110. Additionally, or alternatively, the computing device 102 may obtain the image data 112 via the sensors 116 in real-time (e.g., within a threshold delay) using the application 108. Additionally, or alternatively, the computing device 102 may obtain image data 112 via the sensors 116, which may include cameras or other image sensors that automatically capture images at predetermined intervals in time or in response to triggers (e.g., user input). The sensors 116 may also include external cameras or other devices connected to the computing device 102. In some examples, the computing device 102 may retrieve image data 112 from cloud storage services or platforms linked to an account of a user of the computing device 102.

The sensors 116 may include relatively high-resolution cameras capable of capturing detailed digital images (e.g., with greater than a threshold image resolution). Image resolution refers to a level of detail and clarity in a digital image, which may be measured by a number of pixels per unit area or a total number of pixels in a digital image. The sensors 116 at the computing device 102 may have various image resolution capabilities, ranging from low-resolution sensors suitable for basic image capture to high-resolution cameras capable of capturing detailed digital images with millions of pixels, providing for detailed representations of items in different lighting conditions and environments. Additionally, or alternatively, the sensors 116 may include depth sensors, such as cameras or light sensors with hardware or software capability to measure a time it takes for light to travel from the camera to an object and back to calculate distance and create depth maps of scenes. Thus, the sensors 116 may capture three-dimensional information or data about objects in a digital image or live camera feed. Additionally, or alternatively, the sensors 116 may include infrared sensors for capturing images in conditions with relatively low light (e.g., less than a threshold level of light).

In some cases, the sensors 116 may be implemented directly in the hardware of the computing device 102, such as built-in cameras, accelerometers, or gyroscopes that are part of a physical structure of the computing device 102. Additionally, or alternatively, the sensors 116 may be external devices that are connected to the computing device 102 through wired interfaces (e.g., external ports). In some other examples, the sensors 116 may be wirelessly connected to the computing device 102 using protocols, such as Bluetooth, Wi-Fi, or cellular communications.

One or more capabilities of the computing device 102 to capture and/or process the image data 112 may vary depending on a type or functionality of the sensors 116 implemented by the computing device 102. For example, a computing devices 102 with a relatively high-resolution camera sensor (e.g., greater than a threshold resolution) may capture images with greater detail and clarity, providing for more accurate item identification and analysis. Depth sensors may enable the computing device 102 to capture three-dimensional information about items, which may improve an accuracy of size and shape estimations. A computing device 102 may implement infrared sensors to capture digital images in relatively low-light conditions (e.g., less than a threshold amount of visible light), expanding the range of environments where items can be photographed. Motion sensors, such as accelerometers and gyroscopes, may stabilize image capture, resulting in higher quality digital images even when the computing device 102 or items are moving. Ultra-wide-angle lenses or multiple camera arrays may provide for the computing device 102 to capture a broader field of view and accommodating more items within a single image or providing alternative perspectives of the same items.

The computing device 102 may have various capabilities to process the image data 112 using learning models 118, which can depend on hardware specifications and available computational resources of the computing device 102. In some cases, one or more computing devices 102, such as smartphones or tablets with dedicated neural processing units (NPUs) or advanced mobile processors, may be capable of implementing convolutional neural networks for real-time image classification, object detection, and segmentation tasks. Some computing devices 102, such as desktop computers or laptops with graphical processing unites (GPUs), may implement generative adversarial networks (GANs) for image synthesis and/or large transformer-based models for multi-modal understanding of images and text. Some computing devices 102 may utilize cloud-based processing (e.g., at the server system 104) to offload computationally intensive tasks, providing for computing devices 102 with reduced local resources to leverage learning models 118. Some computing devices 102, such as wearable devices or IoT sensors with reduced processing power, may implement lightweight, quantized versions of learning models, enabling basic image recognition tasks without relying on network connectivity to the networks 106. The capability of a computing device 102 to implement learning models 118 for image processing and listing generation may also depend on available memory resources, battery resources, and thermal management capabilities of the computing device 102.

In some examples, the computing device 102 and/or the server system 104 may implement one or more learning models 118. The learning models 118 may include computational algorithms or statistical models that perform one or more tasks or make predictions using input data, including machine learning models and artificial intelligence algorithms. Example learning models 118 may include, but are not limited to, neural networks, decision trees, classifier algorithms, or the like that analyze objects or items in image data 112 for listing generation and/or compress the image data 112 for storage. For example, a computing device 102 and/or a server system 104 may implement (e.g., deploy, use) a learning model 118 to identify items in uploaded images, generate image representations 114, and/or generate data (e.g., features, attributes, characteristics) related to the items.

The image representations 114 may include compact, machine-readable encodings that capture the content and features of images including one or more items (e.g., from the image data 112). In some cases, the image representations 114 may include numerical vectors or tensors, referred to as feature vectors, which characterize the visual information from an image into a format with a fixed or defined length. The computing device 102 may generate the image representations 114 by processing the image data 112 through one or more layers of a learning model 118, such as a convolutional neural network trained on large datasets of item images. As the image data 112 passes through the learning model 118, the image data 112 may be transformed, with one or more layers detecting features like edges and textures and one or more other layers may detecting patterns and object or item structures. The learning model 118 may output a feature vector that serves as the image representation 114. The feature vector may encode semantic information about the items in the image, including a category of the items, attributes of the items, and visual characteristics of the items. In some cases, the learning model 118 may be fine-tuned (e.g., trained, retrained) on domain-specific datasets to generate image representations 114 for item identification or similarity matching for an online marketplace application (e.g., the application 108). The structure of the image representations 114 may vary according to an architecture of the learning model 118 and one or more intended downstream tasks (e.g., what the computing device 102 may use the image representations 114 for). The image representations 114 may enable efficient storage, retrieval, and comparison of images in image data 112, facilitating various functionalities within the application 108, such as duplicate detection, visual search, or recommendation.

In some cases, the computing device 102 may convert the image data 112 into image representations 114 to reduce the use of computational resources related to processing and storing the image data 112. For example, converting the image data 112 into image representations 114 provides for the computing device 102 to process the images using a central processing unit (CPU) rather than a GPU, which may be more resource intensive. That is, the image representations 114 preserve information about the image data 112, while reducing the data size, enabling faster processing and analysis for image comparison, classification, or similarity matching (e.g., for computing devices 102 with reduced GPU capabilities or reduced battery capabilities). Thus, using image representations 114 provides for deployment of the learning models 118 across a range of computing devices 102 with varying image processing and memory capabilities.

In some examples, the server system 104 may implement a learning model manager 120 to create, update, and distribute learning models 118 to one or more computing devices, including the computing device 102. Additionally, or alternatively, the computing device 102 may implement the learning model manager 120 to create (e.g., generate, train), update, and distribute or use the learning models 118. The learning model manager 120 may use supervised learning techniques to train the learning models 118 to define one or more parameters (e.g., weights and biases, among other examples) of the learning models 118. For example, the learning model manager 120 may train the learning models 118 on labeled datasets of item images and corresponding categories, attributes, features, etc., of the item to define the parameters of a learning model 118 for generating item listings. To train a learning model 118 to generate image representations 114, the labeled dataset may include image data 112 and corresponding expected image representations 114. Additionally, or alternatively, the learning model manager 120 may use unsupervised learning techniques to detect patterns in unlabeled item data and/or semi-supervised learning techniques that combine both labeled and unlabeled data to improve performance (e.g., accuracy and precision) of the learning models 118. The learning model manager 120 may continuously update the parameters of the learning models 118 based on new data from user interactions, market trends, and/or feedback from the listing process to enhance an accuracy and precision of the learning models 118.

The learning model manager 120 may train the learning models 118 to generate item data 122 for including in a listing of one or more items. The learning model manager 120 may transmit (e.g., send, output) the parameters that define or are representative of the learning models 118 to the computing device 102. The parameters can define one or more layers or respective algorithms in the learning model 118, where each layer may have a different set of parameter values obtained from the training. The computing device 102 may provide the image data 112 as input to the learning models 118 to obtain characteristics (e.g., attributes, features) of the items in the image data 112 as output from the learning models 118. The item data 122 may include, but is not limited to, the characteristics of the items (category, color, brand, condition, value information, etc.), metadata related to the items (timestamp of image capture, geolocation data, camera settings, file size, image dimensions, color depth, compression format, etc.), item descriptions, user information of a user account of the application 108, and historical data related to one or more items. For example, item data 122 for a smartphone listing may include a brand, model, storage capacity, color, condition, current market value, and a location of the user account listing the smartphone.

In some examples, the computing device 102 may implement a listing manager 124 to facilitate the creation (e.g., generation and publishing) and management of item listings. For example, the listing manager 124 may implement a learning model 118 to process image data 112 and obtain the item data 122, which may include one or more features (e.g., attributes, characteristics) and information about the items to be listed. The listing manager 124 can use the item data 122 to generate item listings. For example, a computing device 102 may receive image data 112, may provide the image data 112 as input to the learning models 118, and may receive item data 122 as output from the learning models 118. The computing device 102 may use the item data 122 to automatically fill (e.g., without manual user input, pre-fill) fields for listing one or more items at the application 108. Once the computing device 102 fills the fields for listing the items, the listing manager 124 may publish the listings of the one or more items to an online marketplace platform via the application 108.

In some examples, the server system 104 may store the image representations 114, the item data 122, and/or the learning models 118 at a data storage 126. Additionally, or alternatively, the computing device 102 may store the image data 112, the learning models 118, the image representations 114, and/or the item data 122 at a data storage 128. The data storage 126 at the server system 104 and/or the data storage 128 at the computing device 102 may include hardware, such as hard disk drives or solid-state drives, as well as cloud-based storage. The data storage 126 and/or the data storage 128 may use database management systems to organize and retrieve data, such as databases or distributed file systems. The data storage 126 may include databases of item data 122, user information, transaction histories, and/or aggregated statistics related to the items listed via the application 108. The data storage 126 may store one or more versions of learning models 118 and historical image data (e.g., including compressed representations of the image data). The data storage 128 at the computing device 102 may store local copies of one or more learning models 118, recently processed image data 112, image representations 114, and cached item data 122 for offline use or faster access. For example, data storage 126 may store (e.g., include, maintain) a comprehensive database of listed items across the application 108, while the data storage 128 may store a subset of data relevant to a listing history and preferences of a user of the computing device 102 (e.g., a user account).

In some cases, the computing device 102 may use one or more image representations 114 to identify duplicate images and/or items within the image data 112. The server system 104 and/or the computing device 102 may implement learning models 118 to generate image representations 114 for images of items that have been previously listed, received, and/or stored via the application 108. If new images are obtained (e.g., captured or uploaded) at the computing device 102, then the computing device 102 may process the images via the learning models 118 to create additional image representations 114. The computing device 102 may then compare the generated image representations 114 to the existing image representations 114 of previously listed items. The comparison may include calculating a similarity score or distance metric between the image representations 114 (e.g., feature vectors). If the similarity between two image representations 114 exceeds a predetermined threshold, then the computing device 102 may flag the corresponding images or items as potential duplicates or redundant listings. The threshold for determining similarity may be adjusted based on the requirements or criterion of the application 108 or may be user defined. In some cases, the computing device 102 flagging the duplicates may trigger various actions, such as canceling generation of new item listings, notifying a user via the user interface 110, automatically merging listings, or suggesting updates to existing listings based on the image data 112 (e.g., incrementing or augmenting a numerical quantity of items in an existing item listings). By identifying duplicate item listings before generating new ones, the computing device 102 and/or the server system 104 can conserve processing resources by reducing or avoiding unnecessary listing creation and reduce memory usage through the reduction or prevention of redundant data storage.

The communications manager 130 at the server system 104 and the communications manager 132 at the computing device 102 facilitate data exchange between the server system 104 and the computing device 102. The communications manager 130 may process incoming requests from multiple computing devices, manage data transmission queues, and ensure secure and efficient delivery of learning models 118, item data 122, and other information to computing devices (e.g., including the computing device 102). The communications manager 132 may manage the download of learning models 118, synchronize local item data 122 with the server system 104, and process the upload of new listings and images. For example, the communications manager 132 may transmit compressed representations of images in image data 112 that are not duplicates for storage at the server system 104 and/or may transmit the generated listings of items and/or updates to one or more listings of items to the server system 104 for publishing via the application 108. In some cases, the communications manager 132 may transmit an indication of one or more duplicate listings to the server system 104 and/or may output the indication of the one or more duplicate listings at a user interface 110 of the computing device.

The I/O manager 134 at the computing device 102 manages the input and output operations related to the listing process. For example, the I/O manager 134 may receive and process user interactions with a display (e.g., user interface 110) of the computing device 102, sensors 116 of the computing device to capture image data 112, and/or user input for generating (e.g., creating) listings. The I/O manager 134 may also manage the display of user interfaces 110, showing previews of generated listings, suggesting improvements, and presenting notifications about the listing process. For example, the I/O manager may manage a camera interface for capturing item photos, handle text input for item descriptions, and display real-time feedback as the listing is being created, including a notification that one or more images in the image data 112 are duplicates.

The distributed architecture, where learning models 118 are deployed at both the server system 104 and computing device 102, provides for efficient processing of image data 112 and generation of listings. The computing device 102 implementing a learning model 118 to detect duplicate images in image data 112 reduces server load and network traffic, which reduces latency for image processing and listing generation. The learning model manager 120 continuously updates the learning models 118, improving the accuracy of item categorization, description generation, and pricing suggestions over time. The listing manager 124 at the computing device 102 combines local processing capabilities with server-side resources to reduce latency and memory resource usage. The communications manager 130 and the communications manager 132 enable efficient synchronization of data between devices and servers, ensuring that computing devices (e.g., including the computing device 102) have access to updated information and learning models 118.

Having considered an example of an environment, consider now a discussion of some example details of the techniques for image duplication detection using a learning model in accordance with one or more implementations.

### Detecting Duplicate Images Using a Learning Model

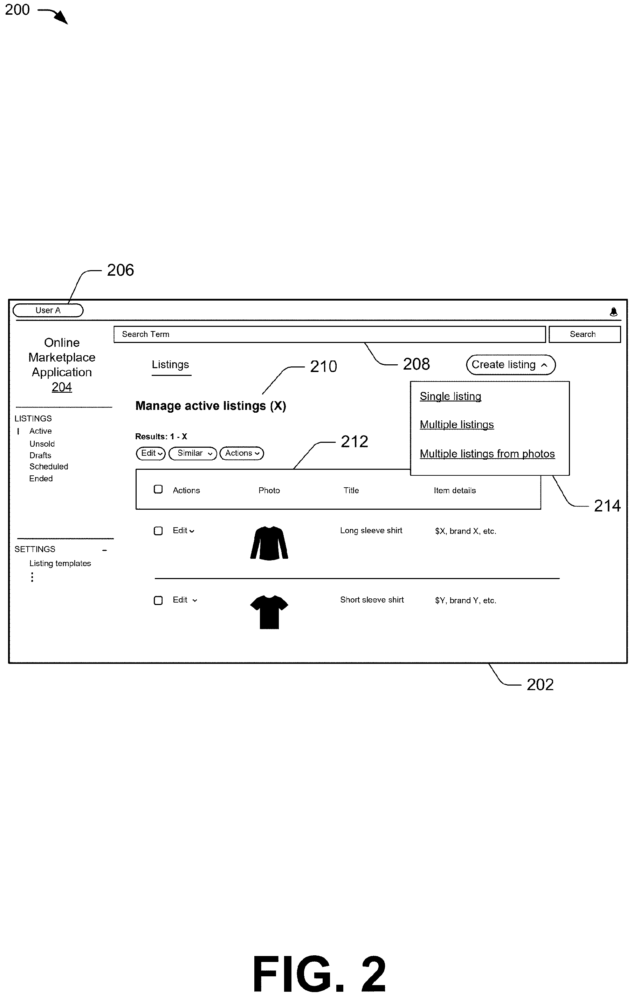

FIG. 2 depicts an example of a user interface 200 for creating multiple listings for items using machine learning. The user interface 200 may implement, or be implemented by, aspects of FIG. 1. For example, the user interface 200 may be implemented by a computing device, such as the user interface 110 implemented by a computing device 102 as described with reference to FIG. 1.

The user interface 200 includes a display 202 that outputs an online marketplace application 204, which may be an example of the application 108 as described with reference to FIG. 1. For example, the online marketplace application 204 may be a software platform that facilitates exchange of items via listings of the items. In some cases, the online marketplace application 204 may include features, such as user accounts, item listings, search functionality, and secure payment processing. In some cases, the online marketplace application 204 may support various types of transactions, including fixed-price sales, auctions, or negotiated deals. The online marketplace application 204 may be accessible through web browsers on desktop computers or as a mobile app on smartphones and tablets. In some examples, the online marketplace application 204 may incorporate machine learning models (e.g., the learning models 118) to generate image representations of items from image data and/or to generate listings of items, as described with reference to FIG. 1.

The display 202 includes a user identifier 206 indicating an account of a user of the online marketplace application 204. The user identifier 206 may be a unique alphanumeric code, username, or other identifier associated with a user account in the online marketplace application 204. Users may log in to the user account through various authentication methods, such as entering a username and password combination, using biometric authentication (e.g., fingerprint or facial recognition), or implementing multi-factor authentication protocols. In some cases, the computing device may receive an indication of one or more settings for the account corresponding to the user identifier 206, which the computing device may store locally in device storage or synchronize with the server system for cloud-based storage. The settings may include notification preferences, privacy controls, default listing options, or personalized filters for browsing items. The computing device 102 may implement secure storage techniques, such as encryption or tokenization, to protect sensitive user data. Additionally, or alternatively, the computing device may utilize caching mechanisms to store frequently accessed user settings in volatile memory for faster retrieval, improving application responsiveness.

Additionally, or alternatively, the display 202 includes a search function 208 that provides for users to enter search terms. The search function 208 may use various algorithms to propagate search results. In some cases, the computing device may implement a ranking algorithm that accounts for factors, such as relevance, popularity, and recency to order search results. In some cases, the search function 208 may implement learning models, such as gradient boosting or neural networks, to improve result relevance. The display 202 presents a listing control 210 that provides options for managing listings for the account corresponding to the user identifier 206.

The display 202 may include a selectable element 212 (buttons, text fields, etc.) including controls for editing and performing actions on listings. For example, the selectable element 212 may provide users with various options to manage and modify listings. Users may edit (e.g., update, modify) listing details, such as updating item descriptions, uploading photos (e.g., images), adjusting a title of the listing, or modifying item details (price, category, etc.). The interface displays listing information including photos, titles, and item details for various items. Users can manage their listings through various status categories such as active, unsold, drafts, scheduled, and ended listings, as shown in the listing control 210.

The user interface 200 includes a listing generation tool 214 that provides multiple options for creating listings, including options for single listings, multiple listings, and multiple listings from photos. The "Multiple listings from photos" option enables users to implement learning models to generate item listings from image data. If a user selects the "Multiple listings from photos" option, then the computing device processes the images using the learning models stored in the local data storage. The learning models generate image representations for each uploaded image. The computing device compares image representations to existing image representations stored in the local data storage to detect duplicates. If duplicate images are detected, then the computing device 102 may display a notification at the user interface 200, alerting the user to the duplicate and suggesting actions, such as increasing the quantity of an existing listing or canceling the creation of a redundant listing. The process of identifying duplicates and displaying a notification of the duplicates leverages the local processing capabilities of the computing device to reduce server load and improve efficiency in listing creation.

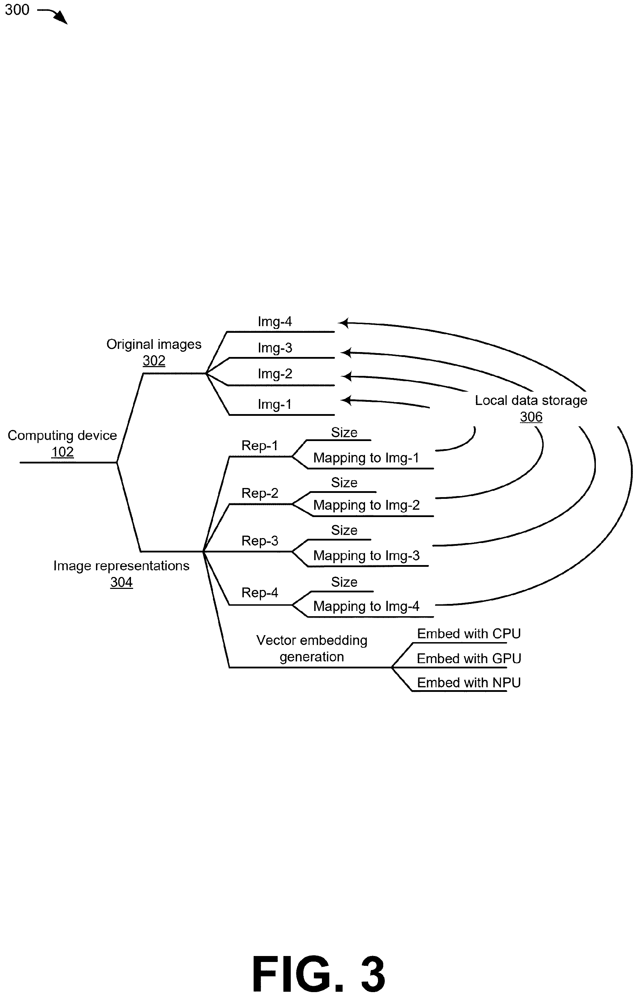

FIG. 3 depicts an example architecture 300 for image duplicate detection using a learning model. The architecture 300 may implement, or be implemented by, aspects of FIGs. 1 and 2. For example, the architecture 300 may be implemented by a computing device 102, which may be an example of a computing device 102 as described with reference to FIG. 1.

The architecture 300 includes a computing device 102 that processes original images 302 to generate image representations 304. The original images 302 may include multiple images captured, obtained, or received by the computing device 102, such as Img-1 through Img-4. The computing device 102 may process each original images 302 to create corresponding image representations 304, including Rep-1 through Rep-4. In some examples, the original images 302 and the image representations 304 may be an example of the image data 112 and the image representations 114, as described with reference to FIG. 1.

The image representations 304 are compact, machine-readable encodings that capture the content and features of the original images 302. For example, the image representations 304 may include numerical vectors or tensors, referred to as feature vectors, which characterize the visual information from an image into a format with a fixed or defined length (e.g., size). The length or size of the image representations 304 may be a numerical quantity of bytes. The computing device 102 generates the image representations 304 by processing the original images 302 through one or more layers of a learning model, such as a convolutional neural network trained on large datasets of item images.

The architecture 300 includes a local data storage 306, for storing the original images 302 and corresponding image representations 304. The local data storage 306 maintains a mapping between the original images 302 and the image representations 304, providing for efficient retrieval and comparison of images. The mapping between the original images 302 and the image representations 304 may provide for a computing device to efficiently store, retrieve, and compare one or more images by facilitating duplicate detection, visual search, and/or recommendation within applications running on the computing device.

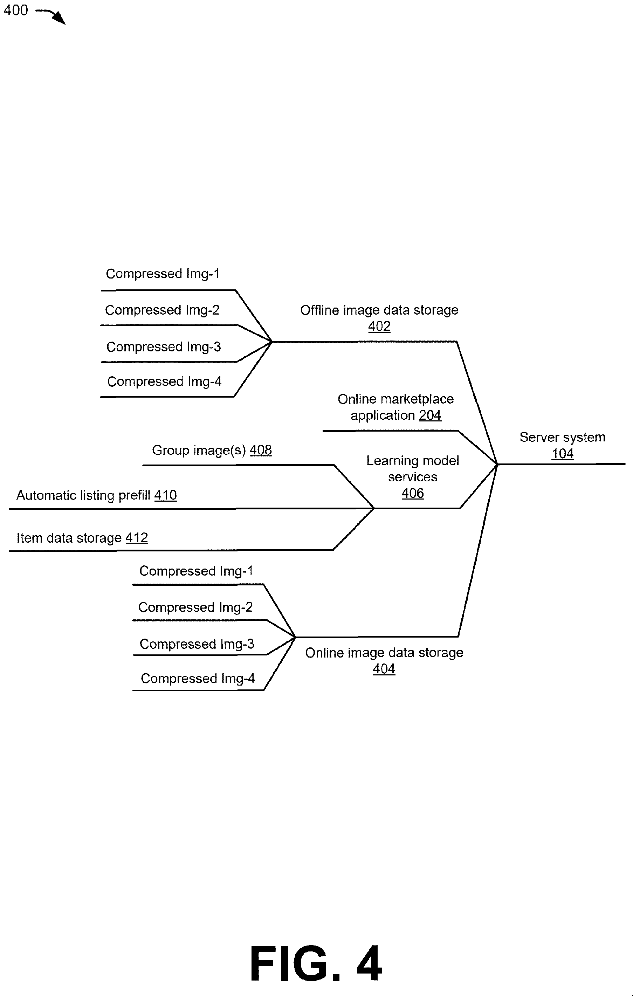

FIG. 4 depicts an example architecture 400 for image duplicate detection using a learning model. The architecture 400 may implement, or be implemented by, aspects of FIGs. 1, 2, and 3. For example, the architecture 400 may be implemented by a server system 104, which may be an example of a server system 104 as described with reference to FIG. 1.

In some examples, the server system 104 may implement the architecture 400 for image storage and processing for listing one or more items at an online marketplace application 204 (e.g., an online marketplace application 204, as described with reference to FIG. 2). The server system 104 may access both offline image data storage 402 and online image data storage 404. The offline image data storage 402 and online image data storage 404 may store multiple compressed versions of images, such as compressed Img-1 through compressed Img-4. The offline image data storage 402 and online image data storage 404 may be examples of the data storage 126, as described with reference to FIG. 1.

The architecture 400 includes learning model services 406, which may implement one or more learning models 118 as described with reference to FIG. 1. The learning model services 406 interface with multiple data sources including one or more group images 408, learning model listing prefill 410, and item data storage 412. The group images 408 may include collections of related images for processing. The learning model listing prefill 410 may provide automated generation of listing details based on image analysis. The item data storage 412 may store information about items, such as categories, attributes, and pricing data, among other examples.

An online marketplace application 204 connects to the server system 104, facilitating interaction between the storage and processing components. The online marketplace application 204 may be an example of the application 108 as described with reference to FIG. 1. The online marketplace application 204 interfaces with the offline image data storage 402 and learning model services 406, providing for the processing and management of image data.

### Example Procedures

This section describes examples of procedures for image duplicate detection using a learning model. Aspects of the procedures may be implemented in hardware, firmware, or software, or a combination thereof. The procedures are shown as a set of blocks that specify operations performed by one or more devices and are not necessarily limited to the orders shown for performing the operations by the respective blocks.

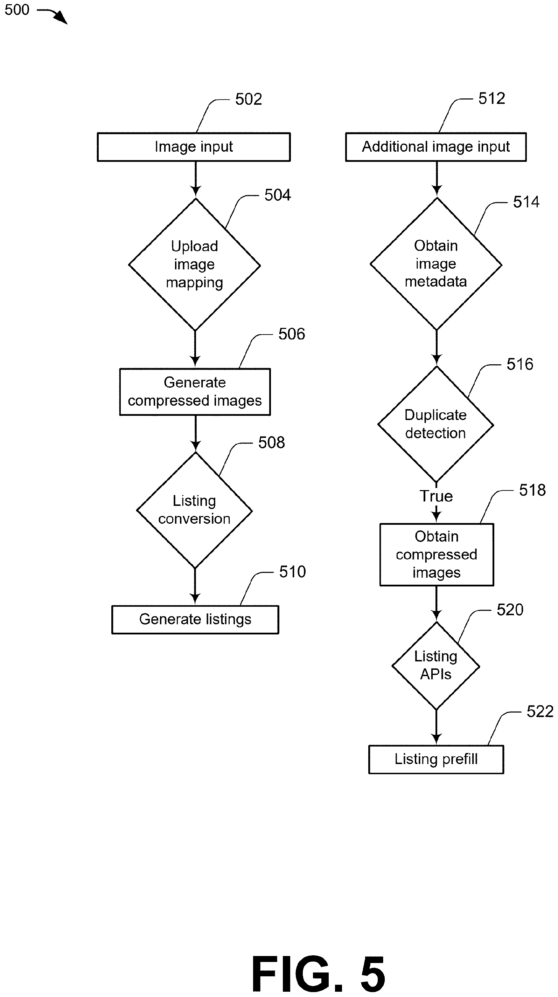

FIG. 5 depicts a procedure 500 in an example implementation of image duplicate detection using a learning model.

At 502, image input is received at a computing device. For example, the computing device can obtain multiple images as input via a user interface and/or may capture images using one or more sensors to use for generating listings at an online marketplace platform.

At 504, an upload image mapping is performed. In some examples, the computing device can generate a mapping between the received images and unique identifiers (e.g., image representations) and/or metadata associated with each image. The mapping can facilitate efficient storage and retrieval of the images.

At 506, compressed images are generated by the computing device. The computing device can implement various compression techniques to reduce the size of the original images while preserving visual information. The compression may conserve storage space and improve processing efficiency.

At 508, a listing conversion is performed. The computing device can process the compressed images to extract relevant information for generating item listings. For example, the computing device may use learning models to identify item characteristics, categories, and/or other attributes for generating listings.

At 510, listings are generated based on the processed image information. The computing device can create item listings for the online marketplace platform using the extracted information from the compressed images.

At 512, an additional image input is received at the computing device. The additional image input may include a subsequent batch of images or additional images received after the initial processing.

At 514, image metadata is obtained for the additional images. The computing device can extract or generate metadata, which may include file names, formats, timestamps, or other relevant information, and image representations for the new images.

At 516, duplicate detection is performed. The computing device compares the image representations of the new images to the image representations of previously processed images to identify duplicates. If the computing device detects a duplicate (e.g., the result is "True"), then at 518, compressed images are obtained for the identified duplicates. Instead of generating new compressed versions, the computing device retrieves the previously created compressed images associated with the detected duplicates.

At 520, listing one or more application programing interfaces (APIs) are used to manage the duplicate images. The computing device may use the APIs to update existing listings or perform other actions related to the duplicate items without creating new listings.

At 522, listing prefill is performed. For the duplicate items, the computing device can automatically populate listing information (e.g., increment a numerical quantity for duplicate listings) using data from existing listings, potentially with options for the user to review or modify the prefilled information.

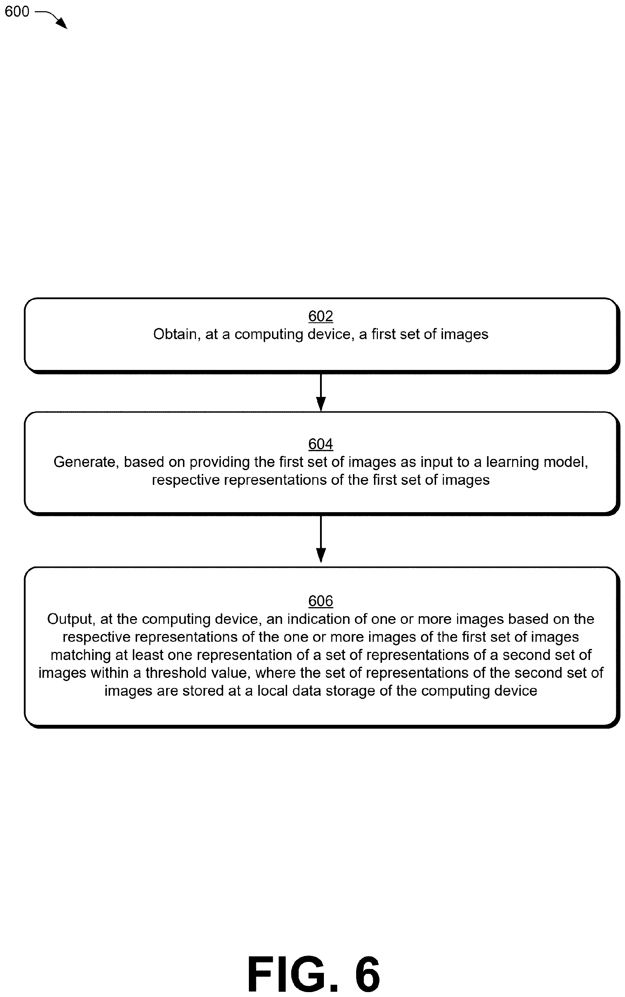

FIG. 6 depicts a procedure 600 in an example implementation of image duplicate detection using a learning model.

At 602, a first set of images is obtained at a computing device. For example, the computing device can obtain (e.g., receive, capture) multiple images of items to be listed on an online marketplace platform. The images can include any numerical quantity of images and can include photographs or scans of the items.

In some examples, the computing device receives one or more parameters representative of (e.g., that define) a learning model for storage at a local data storage of the computing device. In some examples, the computing device transmits a request to a server device (e.g., a device of a server system) responsive to receiving the first set of images. The request indicates the learning model, and the learning model is received in response to the request. The request may include capability information associated with a capability of the computing device to use the learning model, and a type of the learning model may be based on the capability information.

At 604, respective representations of the first set of images are generated based on providing the first set of images as input to the learning model (e.g., the learning model stored at the local data storage). The respective representations of the first set of images may include byte values. In some cases, the computing device stores the learning model at the local data storage to generate the respective representations of the first set of images.

The computing device can compare the respective representations of the first set of images to a set of representations of a second set of images. The set of representations of the second set of images are stored at the local data storage of the computing device and may be organized into a graph data structure. The graph data structure may utilize nodes to represent images and edges to indicate relationships between images. The structure can support various traversal algorithms for efficient searching and matching the images. Comparing the respective representations may include traversing the graph data structure for the respective representations of the first set of images. For example, the computing device can determine that the respective representations of the one or more images of the first set of images match at least one representation of the set of representations of the second set of images within the threshold value by traversing the graph data structure.

At 606, the computing device outputs an indication of one or more images based on the respective representations of the one or more images of the first set of images matching at least one representation of the set of representations of the second set of images within a threshold value. In some examples, the computing device cancels generation of respective listings corresponding to one or more items associated with the one or more images at an online platform based on the matching. The computing device may display a notification that the generation of the respective listings is canceled, where the indication includes the notification. In some other examples, the computing device transmits a request for data corresponding to one or more items associated with the one or more images to a server device and based on the matching. The request includes the at least one representation. The computing device receives the data from the server device and based on a mapping between the respective representations of the one or more images and the data. The computing device then generates respective listings corresponding to the one or more items associated with the one or more images at an online platform and displays a notification of the respective listings, where the indication includes the notification.

In some cases, the computing device displays a notification requesting to increase a respective numerical quantity of items in one or more published listings of one or more items associated with the one or more images based on the matching.

The computing device may remove the learning model from the local data storage based on outputting the indication of the one or more images. In some examples, the first set of images includes the one or more images and one or more remaining images. The computing device updates the graph data structure with the respective representations of the one or more remaining images. The computing device then transmits data associated with the one or more remaining images to a server device. The data includes the one or more remaining images, metadata associated with the one or more remaining images, and the respective representations of the one or more remaining images. The respective representations of the one or more remaining images stored in the local data storage are mapped to the data at the server device.

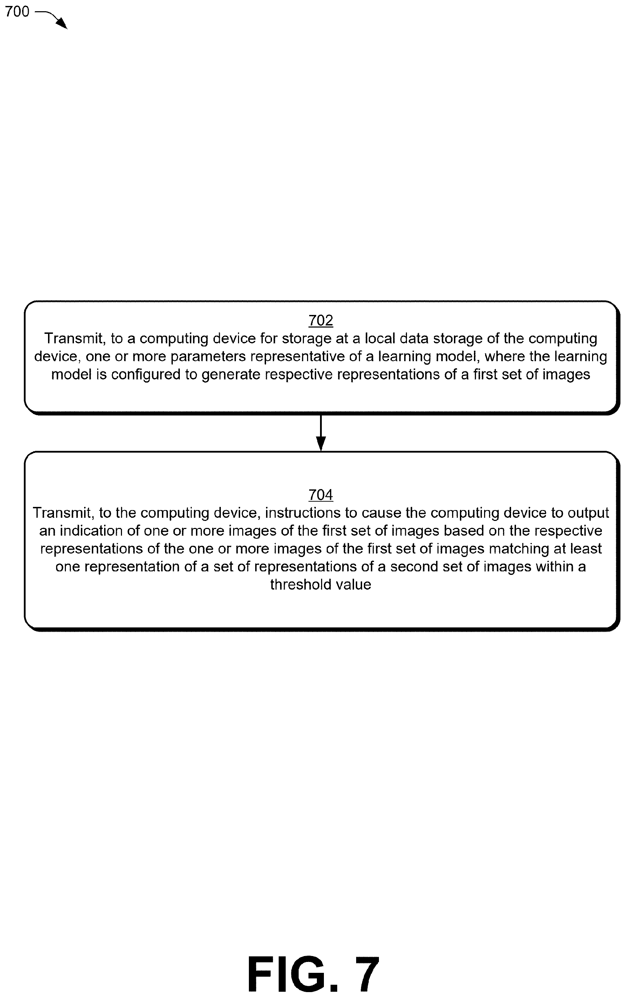

FIG. 7 depicts a procedure 700 in an example implementation of image duplicate detection using a learning model.

At 702, one or more parameters representative of (e.g., that define) a learning model configured to generate respective representations of a first set of images is transmitted to a computing device for storage at a local data storage of the computing device. For example, a server system (e.g., a device in the server system, a server device) can transmit the parameters of the learning model to the computing device in response to receiving a request from the computing device. The request may include capability information associated with a capability of the computing device to use the learning model. The computing device can select a learning model according to the request, where a type of the learning model may be based on the capability information.

At 704, instructions are transmitted to the computing device to cause the computing device to output an indication of one or more images of the first set of images based on the respective representations of the one or more images of the first set of images matching at least one representation of a set of representations of a second set of images within a threshold value. The first set of images may correspond to a first set of items to be listed at an online platform, and the second set of images may correspond to a second set of items previously listed at the online platform.

In some examples, the server system transmits instructions to cause the computing device to cancel generation of respective listings corresponding to one or more items associated with the one or more images at an online platform based on the respective representations of the one or more images of the first set of images matching the at least one representation of the set of representations within the threshold value. The server system may also transmit instructions to cause the computing device to display a notification that the generation of the respective listings is canceled, where the indication includes the notification.

In some other examples, the server system receives a request for data corresponding to one or more items associated with the one or more images from the computing device and based on the respective representations of the one or more images of the first set of images matching the at least one representation of the set of representations within the threshold value. The request includes the at least one representation. The server system transmits the data to the computing device and based on a mapping between the respective representations of the one or more images and the data. The server system then receives respective listings corresponding to the one or more items associated with the one or more images at an online platform from the computing device. The server system publishes the respective listings.

In some variations, the server system receives a notification from the computing device requesting to increase a respective numerical quantity of items in one or more published listings of one or more items associated with the one or more images based on the respective representations of the one or more images of the first set of images matching the at least one representation of the set of representations within the threshold value. The server system then updates the one or more published listings of the one or more items by increasing the respective numerical quantity of items.

The respective representations of the first set of images and the set of representations of the second set of images may include byte values, where the set of representations of the second set of images are organized into a graph data structure in the local data storage of the computing device. In some cases, the first set of images includes the one or more images and one or more remaining images. The server system receives data from the computing device associated with the one or more remaining images. The data may include the one or more remaining images, metadata associated with the one or more remaining images, and the respective representations of the one or more remaining images, where the respective representations of the one or more remaining images stored in the local data storage are mapped to the data.

In some examples, the server system trains the learning model based on providing labeled data samples as input to the learning model. The labeled data samples may include images and corresponding expected image representations. The training process provides for the learning model to continuously improve accuracy and/or precision for generating accurate representations of images for duplicate detection.

Having described examples of procedures in accordance with one or more implementations, consider now an example of a system and device that can be utilized to implement the various techniques described herein.

### Example System and Device

FIG. 8 illustrates an example of a system generally at 800 that includes an example of a computing device 802 that is representative of one or more computing systems and/or devices that may implement the various techniques described herein. This is illustrated through inclusion of the application 108 and the server system 104. The computing device 802 may be, for example, a server of a service provider, a device associated with a client (e.g., a client device), an on-chip system, and/or any other suitable computing device or computing system.

The example computing device 802 as illustrated includes a processing system 804, one or more computer-readable media 806, and one or more I/O interfaces 808 that are communicatively coupled, one to another. Although not shown, the computing device 802 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware elements 810 that may be configured as processors, functional blocks, and so forth. This may include implementation in hardware as an application specific integrated circuit or other logic device formed using one or more semiconductors. The hardware elements 810 are not limited by the materials from which they are formed, or the processing mechanisms employed therein. For example, processors may be comprised of semiconductor(s) and/or transistors (e.g., electronic integrated circuits (ICs)). In such a context, processor-executable instructions may be electronically executable instructions.

The computer-readable media 806 is illustrated as including memory/storage 812. The memory/storage 812 represents memory/storage capacity associated with one or more computer-readable media. The memory/storage 812 may include volatile media (such as RAM) and/or nonvolatile media (such as read only memory (ROM), Flash memory, optical disks, magnetic disks, and so forth). The memory/storage 812 may include fixed media (e.g., RAM, ROM, a fixed hard drive, and so on) as well as removable media (e.g., Flash memory, a removable hard drive, an optical disc, and so forth). The computer-readable media 806 may be configured in a variety of other ways as further described below.

Input/output interface(s) 808 are representative of functionality to allow a user to enter commands and information to computing device 802 and also allow information to be presented to the user and/or other components or devices using various input/output devices. Examples of input devices include a keyboard, a cursor control device (e.g., a mouse), a microphone, a scanner, touch functionality (e.g., capacitive, or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 802 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 802. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable, and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 802, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 810 and computer-readable media 806 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 810. The computing device 802 may be configured to implement particular instructions and/or functions corresponding to the software and/or hardware modules. Accordingly, implementation of a module that is executable by the computing device 802 as software may be achieved at least partially in hardware, e.g., through use of computer-readable storage media and/or hardware elements 810 of the processing system 804. The instructions and/or functions may be executable/operable by one or more articles of manufacture (for example, one or more computing devices 802 and/or processing systems 804) to implement techniques, modules, and examples described herein.

The techniques described herein may be supported by various configurations of the computing device 802 and are not limited to the specific examples of the techniques described herein. This functionality may also be implemented all or in part through use of a distributed system, such as over a "cloud" 814 via a platform 816 as described below.

The cloud 814 includes and/or is representative of a platform 816 for resources 818. The platform 816 abstracts underlying functionality of hardware (e.g., servers) and software resources of the cloud 814. The resources 818 may include applications and/or data that can be utilized while computer processing is executed on servers that are remote from the computing device 802. Resources 818 can also include services provided over the Internet and/or through a subscriber network, such as a cellular or Wi-Fi network.

The platform 816 may abstract resources and functions to connect the computing device 802 with other computing devices. The platform 816 may also serve to abstract scaling of resources to provide a corresponding level of scale to encountered demand for the resources 818 that are implemented via the platform 816. Accordingly, in an interconnected device embodiment, implementation of functionality described herein may be distributed throughout the system 800. For example, the functionality may be implemented in part on the computing device 802 as well as via the platform 816 that abstracts the functionality of the cloud 814.

### Conclusion

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter.

## Claims

1. A computer-implemented method comprising:
obtaining, at a computing device, a first plurality of images;
generating, based at least in part on providing the first plurality of images as input to a learning model, respective representations of the first plurality of images; and
outputting, at the computing device, an indication of one or more images based at least in part on the respective representations of the one or more images of the first plurality of images matching at least one representation of a plurality of representations of a second plurality of images within a threshold value, wherein the plurality of representations of the second plurality of images are stored at a local data storage of the computing device.

2. The computer-implemented method of claim 1, wherein the first plurality of images corresponds to a first plurality of items to be listed at an online platform, and wherein the second plurality of images corresponds to a second plurality of items previously listed at the online platform.

3. The computer-implemented method of claim 1 or 2, further comprising:
canceling generation of respective listings corresponding to one or more items associated with the one or more images at an online platform based at least in part on the respective representations of the one or more images of the first plurality of images matching the at least one representation of the plurality of representations within the threshold value; and
displaying, at the computing device, a notification that the generation of the respective listings is canceled.

4. The computer-implemented method of any one of the preceding claims, further comprising:
transmitting, based at least in part on the respective representations of the one or more images of the first plurality of images matching the at least one representation of the plurality of representations within the threshold value, a request for data corresponding to one or more items associated with the one or more images, wherein the request comprises the at least one representation;
generating respective listings corresponding to the one or more items associated with the one or more images at an online platform; and
displaying, at the computing device, a notification of the respective listings.

5. The computer-implemented method of any one of the preceding claims, further comprising displaying, at the computing device, a notification requesting to increase a respective numerical quantity of items in one or more published listings of one or more items associated with the one or more images based at least in part on the respective representations of the one or more images of the first plurality of images matching the at least one representation of the plurality of representations within the threshold value.

6. The computer-implemented method of any one of the preceding claims, further comprising:
transmitting, responsive to receiving the first plurality of images, a request to a server device, wherein the request indicates the learning model;
receiving, at the computing device for storage at the local data storage of the computing device and based at least in part on the request, one or more parameters representative of the learning model; and
storing, at the local data storage of the computing device, the learning model to generate the respective representations of the first plurality of images,
wherein the request optionally comprises capability information associated with a capability of the computing device to use the learning model, and wherein a type of the learning model is optionally based at least in part on the capability information.

7. The computer-implemented method of any one of the preceding claims, further comprising removing, from the local data storage of the computing device, the learning model based at least in part on outputting the indication of the one or more images.

8. The computer-implemented method of any one of the preceding claims, wherein the respective representations of the first plurality of images and the plurality of representations of the second plurality of images comprise byte values, wherein the plurality of representations of the second plurality of images are organized into a graph data structure in the local data storage of the computing device, and wherein the computer-implemented method further comprises determining, based at least in part on traversing the graph data structure, that the respective representations of the one or more images of the first plurality of images match at least one representation of the plurality of representations of the second plurality of images within the threshold value,
wherein the first plurality of images optionally comprises the one or more images and one or more remaining images, and wherein the computer-implemented method optionally further comprises:
updating the graph data structure with the respective representations of the one or more remaining images; and
transmitting, to a server device, data associated with the one or more remaining images, wherein the data comprises the one or more remaining images, metadata associated with the one or more remaining images, and the respective representations of the one or more remaining images, and wherein the respective representations of the one or more remaining images stored in the local data storage are mapped to the data at the server device.

9. A system comprising:
one or more processors; and
a computer-readable storage medium storing instructions that are executable by the one or more processors to perform operations comprising:
receiving, at a computing device, a first plurality of images;
generating, based at least in part on providing the first plurality of images as input to a learning model, respective representations of the first plurality of images; and
outputting, at the computing device, an indication of one or more images based at least in part on the respective representations of the one or more images of the first plurality of images matching at least one representation of a plurality of representations of a second plurality of images within a threshold value, wherein the plurality of representations of the second plurality of images are stored at a local data storage of the computing device.

10. A computer-implemented method comprising:
transmitting, to a computing device for storage at a local data storage of the computing device, one or more parameters representative of a learning model, wherein the learning model is configured to generate respective representations of a first plurality of images; and
transmitting, to the computing device, instructions to cause the computing device to output an indication of one or more images of the first plurality of images based at least in part on the respective representations of the one or more images of the first plurality of images matching at least one representation of a plurality of representations of a second plurality of images within a threshold value.

11. The computer-implemented method of claim 10, wherein the first plurality of images corresponds to a first plurality of items to be listed at an online platform, and wherein the second plurality of images corresponds to a second plurality of items previously listed at the online platform; and/or
wherein the method further comprises:
transmitting, to the computing device, instructions to cause the computing device to cancel generation of respective listings corresponding to one or more items associated with the one or more images at an online platform based at least in part on the respective representations of the one or more images of the first plurality of images matching the at least one representation of the plurality of representations within the threshold value; and
transmitting, to the computing device, instructions to cause the computing device to display, at the computing device, a notification that the generation of the respective listings is canceled.

12. The computer-implemented method of claim 10 or 11, further comprising:
receiving, based at least in part on the respective representations of the one or more images of the first plurality of images matching the at least one representation of the plurality of representations within the threshold value, a request for data corresponding to one or more items associated with the one or more images, wherein the request comprises the at least one representation;
receiving, from the computing device, respective listings corresponding to the one or more items associated with the one or more images at an online platform; and
publishing the respective listings.

13. The computer-implemented method of any one of claims 10 to 12, wherein the method further comprises:
receiving, from the computing device, a notification requesting to increase a respective numerical quantity of items in one or more published listings of one or more items associated with the one or more images based at least in part on the respective representations of the one or more images of the first plurality of images matching the at least one representation of the plurality of representations within the threshold value; and
updating the one or more published listings of the one or more items by increasing the respective numerical quantity of items; and/or
wherein transmitting the one or more parameters representative of the learning model comprises:
receiving, from the computing device, a request that indicates the learning model, wherein the request comprises capability information associated with a capability of the computing device to use the learning model; and
selecting the learning model based at least in part on the request, wherein a type of the learning model is based at least in part on the capability information.

14. The computer-implemented method of any one of claims 10 to 13, wherein the respective representations of the first plurality of images and the plurality of representations of the second plurality of images comprise byte values, wherein the plurality of representations of the second plurality of images are organized into a graph data structure in the local data storage of the computing device,
wherein the first plurality of images optionally comprises the one or more images and one or more remaining images, and wherein the computer-implemented method optionally further comprises receiving, from the computing device, data associated with the one or more remaining images, wherein the data comprises the one or more remaining images, metadata associated with the one or more remaining images, and the respective representations of the one or more remaining images, and wherein the respective representations of the one or more remaining images stored in the local data storage are mapped to the data.

15. The computer-implemented method of any one of claims 10 to 14, further comprising training the learning model based at least in part on providing, as input to the learning model, labeled data samples comprising images and corresponding expected image representations.
